# EUROPEAN PATENT SPECIFICATION

(11) **EP 2 169 772 B1**
(45) Date of publication and mention of the grant of the patent: **15.06.2011**
(21) Application number: 09011447.1
(22) Date of filing: 07.09.2009
(51) Int. Cl.: H01R 4/18, H01R 11/12, H01R 43/00, H02G 1/14

(54) **A waterproof device and a waterproof device producing method**
Wasserfeste Vorrichtung und Verfahren zur Herstellung einer wasserfesten Vorrichtung
Dispositif étanche et procédé de production de dispositif étanche

(30) Priority: 25.09.2008 JP 2008246041
(43) Date of publication of application: 31.03.2010
(73) Proprietor: Sumitomo Wiring Systems, Ltd., Yokkaichi-city, Mie 510-8503 (JP)
(72) Inventor: Okayasu, Yasushi, Yokkaichi-City Mie 510-8503 (JP); Uchiyama, Yoshihiro, Yokkaichi-City Mie 510-8503 (JP); Mori, Kanako, Yokkaichi-City Mie 510-8503 (JP)
(74) Representative: Müller-Boré & Partner Patentanwälte

(56) References cited:
- JP-A- 2007 250 333
- US-A1- 2002 160 649

## Description

The present invention relates to a waterproof device and a waterproof device producing method.

Japanese Unexamined Patent Publication No. 2007-250333 discloses a waterproof device for waterproofing connected parts of a terminal fitting and a wire. This waterproof device includes a waterproof cover for accommodating the connected parts of the terminal fitting and the wire and a filling material to be injected into the waterproof cover. The waterproof cover includes a box-shaped main body and a lid for partly closing an opening of the main body. A front end part of the terminal fitting serves as a terminal portion which functions as connection means with a mating side, and a rear end part thereof serves as a wire connecting portion in the form of an open barrel. A conductor is exposed by removing an insulation coating in a front end portion of the wire, and the wire connecting portion is crimped into connection with the exposed conductor. A rear end portion of the terminal fitting, the wire connecting portion and a front end part of the wire are accommodated in the waterproof cover, and clearances in the waterproof cover are filled with the filling material. By this filling material, the connected parts of the wire connecting portion and the conductor are surrounded in a watertight manner.

After the filling material is injected into the waterproof cover, the waterproof cover particularly is heated to cure the filling material. If moisture is mixed in the filling material, this moisture mixed in the filling material vaporizes in the heating process, thereby generating bubbles caused by steam in the filling material, and these bubbles expand as the heating proceeds. By these bubble generation and expansion, a pressing force comes to act on the terminal fitting from the filling material. Since the acting position, direction and magnitude of this pressing force are unspecified, problems such as a displacement of the terminal fitting and an inclination thereof to an improper posture with respect to the waterproof cover

The present invention was developed in view of the above situation and an object thereof is to prevent changes in the posture and posture of a terminal fitting particularly due to a process of heating a filling material in a fluid- or waterproof cover.

This object is solved according to the invention by the features of the independent claims. Preferred embodiments of the invention are subject of the dependent claims.

According to the invention, there is provided a waterproof device including waterproof connected parts of a wire and a terminal fitting, comprising:
a waterproof cover into which a wire connecting portion of the terminal fitting an a part of the wire are to be accommodated, the wire connecting portion being formed to be continuous with a terminal portion to be connected with a connection object,
wherein clearances in the waterproof cover are at least partly filled with a filling material, and
the waterproof cover is formed with at least one holding portion for holding the terminal fitting in such a manner as to prevent a movement of the terminal fitting with respect to the waterproof cover by coming into contact with the terminal fitting.

Even if a pressing force acts on the terminal fitting from the filling material e.g. during a heating process of the filling material, the terminal fitting is prevented from moving with respect to the waterproof cover by the contact action of the holding portion. Thus, there is no likelihood of displacing or inclining the terminal fitting with respect to the waterproof cover.

According to a preferred embodiment of the invention, there is provided a waterproof device for waterproofing connected parts of a wire and a terminal fitting, characterized in that:
the wire is such that a conductor is surrounded by an insulation coating and the insulation coating is removed in a front end portion to exposed the conductor,
the terminal fitting includes a terminal portion to be connected with a connection object and a wire connecting portion formed to be continuous with the rear end of the terminal portion and to be connected with an exposed part of the conductor,
the wire connecting portion and the exposed part of the conductor are accommodated in a waterproof cover,
clearances in the waterproof cover are filled with a filling material, and
the waterproof cover is formed with a holding portion for holding the terminal fitting in such a manner as to prevent a movement of the terminal fitting with respect to the waterproof cover by coming into contact with the terminal fitting.

Preferably, the waterproof cover is formed with at least one confirmation opening substantially corresponding to a front end portion of the wire projecting forward from the wire connecting portion.

Further preferably, the holding portion projects from a wall portion formed with the confirmation opening out of wall portions constituting the waterproof cover and is arranged behind the confirmation opening.

Most preferably, the waterproof cover is formed with a confirmation opening corresponding to a front end portion of the conductor projecting forward from the wire connecting portion, and
the holding portion projects from a wall portion formed with the confirmation opening out of wall portions constituting the waterproof cover and is arranged behind the confirmation opening.

Since the holding portion is arranged behind the confirmation opening, whether or not the front end surface of the conductor is properly covered by the filling material can be visually confirmed through the confirmation opening.

According to a preferred embodiment of the invention, the terminal portion comprises a positioning portion to be positioned by coming into surface contact with a front wall of the waterproof cover, and
the holding portion comes into contact with a front end portion of the wire connecting portion in a direction substantially parallel to the front wall.

Preferably, a contact position of the holding portion with the wire connecting portion is close to the front end of the wire connecting portion.

Most preferably, a rear end portion of the terminal portion serves as a positioning portion to be positioned by coming into surface contact with a front wall of the waterproof cover,
the holding portion comes into contact with a front end portion of the wire connecting portion in a direction substantially parallel to the front wall, and
a contact position of the holding portion with the wire connecting portion is close to the front end of the wire connecting portion.

If the terminal fitting tries to incline its posture with a contact position with the holding portion as a supporting point, the positioning portion is relatively displaced substantially in parallel with the front wall while being inclined with respect to the front wall. An angle of inclination of the positioning portion at this time is larger as a distance between the front wall and the holding portion is shorter. As the positioning portion is more inclined, friction between the positioning portion and the front wall becomes larger. Thus, an effect of suppressing the displacement of the positioning portion increases and, consequently an effect of suppressing the inclination of the terminal fitting is improved. In view of this point, in the present invention, the holding portion is held in contact with the wire connecting portion at a position close to the front end of the wire connecting portion to maximally shorten the distance between the front wall and the holding portion. Therefore, the inclination of the terminal fitting can be more effectively prevented.

According to a preferred embodiment of the invention, an injection opening used to inject the filling material into the waterproof cover is formed in a wall portion constituting part of the waterproof cover, and wherein the holding portion projects from the wall portion.

Preferably, the holding portion includes a plurality of projections which come into contact with the wire connecting portion at a plurality of laterally spaced-apart positions.

Further preferably, a space enclosed by the plurality of projections and the outer surface of the wire connecting portion serves as a flow path for permitting the flow of the filling material substantially in forward and backward directions.

Most preferably, an injection opening used to inject the filling material into the waterproof cover is formed in a wall portion constituting the waterproof cover,
the holding portion projects from the wall portion and includes a plurality of projections which come into contact with the wire connecting portion at a plurality of laterally spaced-apart positions, and
a space enclosed by the plurality of projections and the outer surface of the wire connecting portion serves as a flow path for permitting the flow of the filling material in forward and backward directions.

Since the holding portion comes into contact with the wire connecting portion at the plurality of laterally spaced-apart positions, a lateral inclination of the terminal fitting can be reliably prevented. Further, the filling material injected through the injection opening smoothly spreads in both spaces before and after the holding portion by passing the flow path.

According to a preferred embodiment of the invention, the wire connecting portion is formed such that at least one pair of lateral crimping pieces stand up from a base plate and at least partly surrounds a conductor of the wire by the base plate and the pair of crimping pieces, and
the pair of crimping pieces are curved inwardly and the standing end edges thereof bite in or engage the outer circumferential surface of the conductor with the conductor connected with the wire connecting portion, whereby a valley extending substantially in forward and backward directions is formed in the upper surface of the wire connecting portion.

Preferably, the holding portion is formed with at least one fitting portion to be at least partly fitted into the valley.

Most preferably, the wire connecting portion is formed such that a pair of left and right crimping pieces stand up from a bottom plate and surrounds the conductor by the bottom plate and the pair of crimping pieces,
the pair of crimping pieces are curved inwardly and the standing end edges thereof bite in the outer circumferential surface of the conductor with the conductor connected with the wire connecting portion, whereby a valley extending in forward and backward directions is formed in the upper surface of the wire connecting portion, and
the holding portion is formed with a fitting portion to be fitted into the valley.

The fitting portion of the holding portion is fitted into the valley of the wire connecting portion, thereby preventing a lateral displacement of the terminal fitting.

According to a preferred embodiment of the invention, at least one receiving portion for sandwiching the wire connecting portion together with the holding portion is formed on the inner surface of the waterproof cover.

The wire connecting portion is sandwiched between the holding portion and the receiving portion to be reliably positioned.

According to the invention, there is further provided a method for producing a fluid- or waterproof device, in particular according to the invention or a preferred embodiment thereof, for fluid- or waterproofing connected parts of a conductor of a wire and a wire connecting portion of a terminal fitting by at least partly accommodating the connected parts in a fluid- or waterproof cover and at least partly injecting a filling material into the fluid- or waterproof cover, comprising the steps of:
at least partly accommodating the connected conductor and wire connecting portion in a main body of the fluid- or waterproof cover,
injecting a part of the filling material into the main body,
mounting a lid in an opening of the main body to bring at least one holding portion of the lid into contact with the terminal fitting in such a manner as to prevent a movement of the terminal fitting with respect to the fluid- or waterproof cover, and
injecting the remainder of the filling material into the main body.

According to a preferred embodiment of the invention, there is further provided a method for producing a waterproof device for waterproofing connected parts of a conductor of a wire and a wire connecting portion of a terminal fitting by accommodating the connected parts in a waterproof cover and injecting a filling material into the waterproof cover, wherein the waterproof cover includes a box-shaped main body and a lid to be mounted in an opening of the main body, the filling material can be injected with the lid mounted on the main body, and the lid is formed with a holding portion for holding the terminal fitting in such a manner as to prevent a movement of the terminal fitting with respect to the waterproof cover by coming into contact with the terminal fitting, comprising the steps of:
accommodating the connected conductor and wire connecting portion in the main body,
injecting a part of the filling material into the main body,
mounting the lid in the opening of the main body to bring the holding portion into contact with the terminal fitting, and
injecting the remainder of the filling material into the main body.

Since the holding portion is so located as to at least partly partition the space between the terminal fitting and the waterproof cover, it may hinder the flow of the filling material injected into the waterproof cover. In this respect, since a part of the filling material is injected into the main body before the holding portion is brought into contact with the terminal fitting, the influence of the holding portion on the flow of the filling material can be suppressed low.

Preferably, the method further comprises a step of injecting a part of the filling material onto the bottom surface of the main body before the connected conductor and wire connecting portion are at least partly accommodated into the main body.

Since a part of the filling material is injected onto the bottom surface of the main body before the wire connecting portion and the conductor are accommodated into the main body, the filling material can be reliably filled between the bottom surface of the main body and the lower surface of the wire connecting portion.

Preferably, the method further comprises a step of detecting a filled state of the filling material through at least one confirmation opening formed in the waterproof cover substantially corresponding to a front end portion of the wire projecting forward from the wire connecting portion, wherein the holding portion preferably projects from a wall portion formed with the confirmation opening out of wall portions constituting the waterproof cover and is arranged behind the confirmation opening.

Preferably, the method further comprises a step of positioning a positioning portion of the terminal portion by bringing it into surface contact with a front wall of the waterproof cover, wherein the holding portion comes into contact with a front end portion of the wire connecting portion in a direction substantially parallel to the front wall.

These and other objects, features and advantages of the present invention will become more apparent upon reading of the following detailed description of preferred embodiments and accompanying drawings. It should be understood that even though embodiments are separately described, single features thereof may be combined to additional embodiments, as long as they fall under the scope of the claims.
FIG. 1 is a longitudinal section of a first embodiment,
FIG. 2 is a lateral section of the first embodiment without any graphical representation of a filling material,
FIG. 3 is a plan view of the first embodiment,
FIG. 4 is a plan view of a waterproof cover with a lid located at an opening position,
FIG. 5 is a rear view of the waterproof cover with the lid located at the opening position,
FIG. 6 is a longitudinal section of the main body with the lid located at the opening position,
FIG. 7 is a longitudinal section of the main body showing a state where a part of the filling material is injected with the lid located at the opening position in a production process,
FIG. 8 is a longitudinal section of the main body showing a state where a conductor and a wire connecting portion are accommodated in the state of FIG. 7 in the production process,
FIG. 9 is a plan view of the waterproof cover showing the state where the conductor and the wire connecting portion are accommodated in the state of FIG. 7 in the production process,
FIG. 10 is a longitudinal section of the main body showing a state where a part of the filling material is injected in the state of FIG. 8 in the production process,
FIG. 11 is a longitudinal section of the main body showing a state where the lid is displaced to a closing position in the state of FIG. 10 in the production process,
FIG. 12 is a longitudinal section of a waterproof cover without any graphical representation of a filling material in a second embodiment,
FIG. 13 is a lateral section of the waterproof cover without any graphical representation of a filling material in the second embodiment,
FIG. 14 is a lateral section of a waterproof cover without any graphical representation of a filling material in a third embodiment, and
FIG. 15 is a longitudinal section of a waterproof cover without any graphical representation of a filling material in a fourth embodiment.

### <First Embodiment>

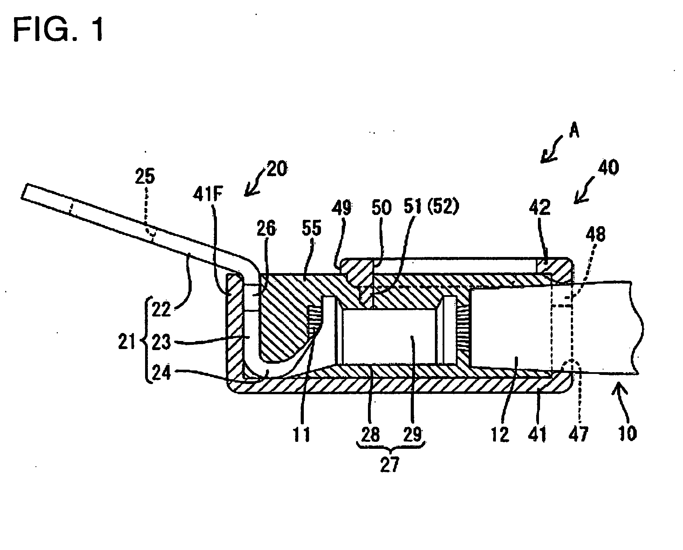

Hereinafter, a first preferred embodiment of the present invention is described with reference to FIGS. 1 to 11. A waterproof device A of this embodiment is designed to accommodate connected parts of a front end portion of a wire 10 and a wire connecting portion 27 of a terminal fitting 20 in a sealed or fluidproof or waterproof cover 40 and at least partly fill a filling material 55 into the waterproof cover 40, thereby waterproofing or sealing or fluidproofing the connected parts of the wire 10 and the terminal fitting 20.

A known resin such as an epoxy resin or a silicone resin can be used as the filling material 55. This filling material 55 is in the form of fluid with low viscosity upon being injected into a main body 41, but is cured preferably by a heating process after the injection.

The wire 10 includes a conductor 11 (preferably formed by twisting a plurality of metal thin wires) and an insulation coating 12 at least partly covering this conductor 11. In a front end portion of the wire 10, the conductor 11 is exposed by a specified (predetermined or predeterminable) length by at least partly removing the insulation coating 12.

The terminal fitting 20 is formed by bending, folding and/or embossing a conductive (preferably metal) plate material punched or cut out into a specified (predetermined or predeterminable) shape, wherein a first part (preferably a front end part) of the terminal fitting 20 serves as a terminal portion 21 which functions as connection means with a mating terminal (not shown) and a second part (preferably a rear end part) thereof serves as a wire connecting portion 27 which functions as connection means with the wire 10.

The terminal portion 21 includes a (preferably substantially plate-like) connecting portion 22 (preferably inclined backward), a positioning portion 23 substantially continuous with the rear end of the plate-like connecting portion 22 and a coupling portion 24 coupling the positioning portion 23 and the wire connecting portion 27. Preferably, the substantially plate-like connecting portion 22 is in the form of a substantially flat plate and/or formed with a vertically penetrating through hole 25. The plate-like connecting portion 22 is to be at least partly placed on the mating terminal and a fixing member such as a bolt (not shown) at least partly inserted through the through hole 25 is fixed to (preferably screwed into) the mating terminal, whereby the terminal fitting 20 and the mating terminal are electrically connected. The positioning portion 23 preferably is in the form of a substantially flat plate extending at an angle different from 0° or 180°, preferably substantially normal or downward from the rear end of the plate-like connecting portion 22. One or more, preferably a pair of locking projections 26 are formed on the positioning portion 23, preferably at the upper end (or an end toward the connecting portion 22) of the positioning portion 23 and/or at the substantially opposite lateral (left and/or right) edge(s) of the positioning portion 23. The coupling portion 24 preferably is in the form of a short rib extending at an angle different from 0° or 180°, preferably substantially normal or backward from the lower end (or end substantially opposite to the connecting portion 22) of the positioning portion 23.

The wire connecting portion 27 preferably is in the form of or comprises at least one substantially open barrel and includes a bottom or base plate 28 and one or more, preferably a pair of (preferably substantially laterally symmetrical) crimping pieces 29 standing up or projecting from the bottom plate 28, preferably from the substantially opposite lateral (left and/or right) edge(s) of the bottom plate 28. It should be, however, understood that the wire connecting portion 27 may comprises one or more barrels formed into so-called cross barrels (not shown) particularly where the barrels are preferably offset with respect to each other in forward and backward directions and/or the lateral edges of the crimping pieces substantially facing each other preferably are inclined with respect to each other so that upon at least partly overlapping the crimping pieces edges thereof cross each other. Moreover, it should be understood that other means for connecting to the wire different from crimping means may be provided such as soldering members, insulation displacement members, connecting members etc. May be alternatively or additionally provided.

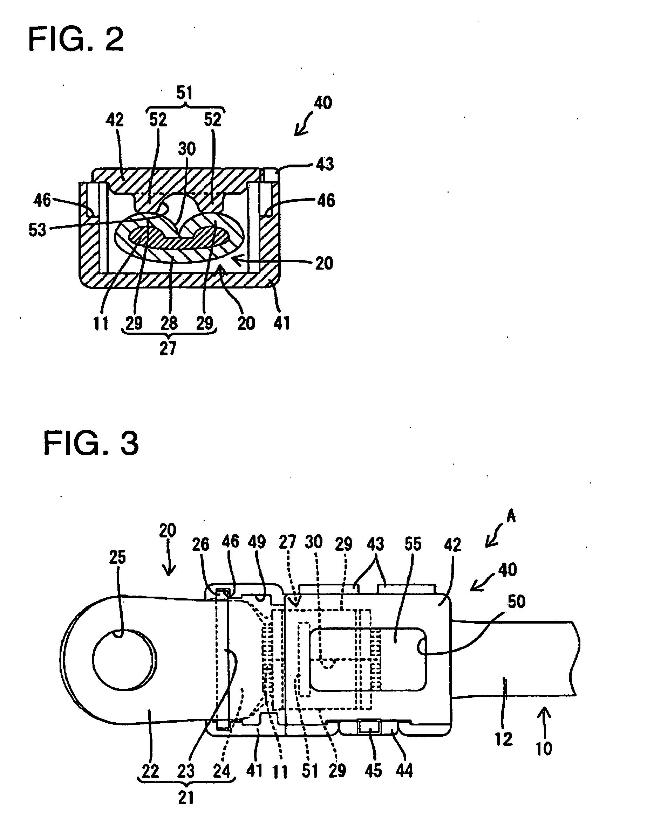

The front end of the bottom plate 28 is substantially continuous with the coupling portion 24. This wire connecting portion 27 preferably is crimped or bent or folded into electrical connection with the conductor 11 of the wire 10. Upon the crimping operation, the one or more, preferably the pair of crimping pieces 29 are crimped or bent or folded and deformed substantially inwardly with the conductor 11 at least partly placed substantially on the bottom plate 28, whereby the conductor 11 is at least partly surrounded by the bottom plate 28 and the (pair of) crimping piece(s) 29. At this time, the standing end edges of the (both) crimping piece(s) 29 preferably bite or engage in the conductor 11 from above (or from a side substantially opposite to the bottom plate 28), and a valley 30 extending substantially in forward and backward directions (directions substantially parallel to a longitudinal direction of the conductor 11) is formed in the respective (upper) surface of the wire connecting portion 27 by this biting of the both crimping pieces 29 (see FIG. 2). This valley 30 preferably is substantially continuously formed over the entire length of the wire connecting portion 27.

In the connected or crimped state, the lower surface (lower end) of the bottom plate 28 preferably is located slightly higher than the lower surface of the coupling portion 24 and/or the upper end of the wire connecting portion 27 preferably is located lower than that of the positioning portion 23 (lower end of the plate-like connecting portion 22). The front end of the conductor 11 preferably projects slightly forward from the front end of the wire connecting portion 27, and/or a space is at least partly formed in forward and backward directions between the front end of the conductor 11 and the positioning portion 23. This space preferably is open toward the upper, left and/or right sides or on one or more sides other than the side of the bottom plate 28. A part of the wire 10 at least partly covered by the insulation coating 12 preferably is substantially coaxially drawn out backward from the wire connecting portion 27, and the upper end of the insulation coating 12 preferably is located slightly higher than that of the wire connecting portion 27 and slightly lower than that of the positioning portion 23.

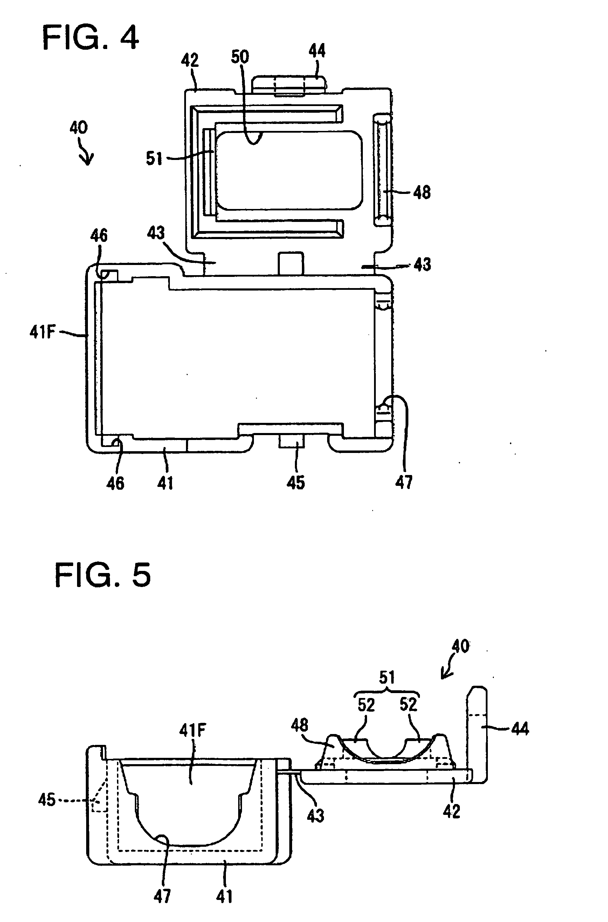

The waterproof cover 40 is made e.g. of synthetic resin and an integral or unitary assembly of the (preferably substantially box-shaped) main body 41 formed with a (preferably substantially rectangular) opening in its upper surface, at least one lid 42 at least partly mountable in or at the opening of the upper surface of the main body 41 and preferably at least one hinge 43 coupling the main body 41 and the lid 42. This hinge 43 preferably couples the upper end edge of the right wall of the main body 41 and the lateral (right) edge of the lid 42, and the lid 42 is or can be rotationally or pivotally displaced between an opening position (see FIGS. 4 to 10) to be retracted laterally (to the right) of the main body 41 and a closing position (see FIGS. 1 to 3 and 11) to at least partly close the opening of the main body 41 by bending the hinge 43 along a folding line preferably substantially extending in forward and backward directions preferably substantially parallel to the upper end edge of the right wall of the main body 41. With the lid 42 displaced to the closing position, at least one lock arm 44 of the lid 42 is engaged with at least one respective lock projection 45 on the lateral (left) outer surface of the main body 41, whereby the lid 42 is locked at the closing position. The lid 42 displaced towards or to the closing position constitutes the upper wall of the waterproof cover 40.

One or more, preferably a pair of locking grooves 46 are formed preferably by cutting off upper or distal end parts of the front ends of the (preferably substantially opposite) lateral (left and/or right) wall(s) of the main body 41. The front surfaces of the locking grooves 46 preferably are substantially flush with the inner surface of a front wall 41 F of the main body 41. The locking projections 26 of the terminal fitting 20 are to be at least partly fitted into the locking grooves 46 in an arrangement direction (from above) for engagement (see e.g. FIG. 3). With the wire connecting portion 27 and the conductor 11 at least partly accommodated in the main body 41, the positioning portion 23 of the terminal fitting 20 preferably is held in surface contact with the front wall 41 F from behind and/or the one or more locking projections 26 are engaged with the one or more locking grooves 46, whereby the positioning portion 23 is positioned with respect to the front wall 41 F substantially in forward and backward directions. Further, the positioning portion 23 preferably is laterally positioned with respect to the main body 41 by the contact of the (preferably substantially opposite) lateral (left and/or right) edge(s) of the positioning portion 23 with the lateral (left and/or right) wall(s) of the main body 41.

At least one slot 47, through which the at least one wire 10 is to be drawn out of the main body 41, is formed in the rear wall of the main body 41. On the other hand, at least one pressing portion 48 (substantially corresponding to the slot 47) preferably is formed at the rear end of the inner surface of the lid 42. With the wire connecting portion 27 and the conductor 11 at least partly accommodated in the main body 41, the wire 10 is at least partly fitted in the slot 47. When the lid 42 is displaced towards or to the closing position in this state, the pressing portion 48 presses the wire 10 from above, whereby displacements of the wire 10 with respect to the main body 41 and the lid 42 in vertical and/or lateral directions preferably are restricted. Further, since clearances between the rear wall and the wire 10 and between the wire 10 and the lid 42 preferably are substantially closed, there is no likelihood that the filling material 55 injected into the waterproof cover 40 flows along the outer circumferential surface of the wire 10 to leak out to the back side of the waterproof cover 40.

The lid 42 preferably is substantially in the form of a substantially rectangular plate and/or so to be mounted as to correspond to more than about half area (e.g. to an about 2/3 area) of the opening in the upper surface of the main body 41 preferably at the rear side. With the lid 42 displaced to the closing position, a conformation opening 49 is formed in an area of the opening of the main body 41 before the lid 42 (less than about half area, e.g. an about 1/3 area of the opening of the main body 41 at the front side). This confirmation opening 49 preferably functions as an entrance for injecting the filling material 55 into the waterproof cover 40 (main body 41) and a window hole for permitting a filled state of the filling material 55 for the front end portion of the conductor 11 to be detected (e.g. visually confirmed) obliquely from a front-upper side, for example, during the production process of the waterproof device A. This confirmation opening 49 preferably also functions as a draw-out opening for permitting the terminal portion 21 to be drawn out of the waterproof cover 40.

A (preferably substantially rectangular) cutout preferably is made in the lid 42 while leaving four front, rear, left and right edge portions, thereby forming an injection opening 50. Further, the lid 42 is integrally or unitarily formed with a holding portion 51 projecting inwardly (downwardly with the lid 42 located at the closing position) from the front edge portion of the injection opening 50. As shown in FIG. 2, the holding portion 51 includes one or more projections 52, preferably a pair of substantially laterally symmetrical projections 52 spaced apart in the lateral direction. With the lid 42 located at the closing position, the (pair of) projection(s) 52 is/are held in contact with the upper end surface(s) of the (pair of) crimping piece(s) 29 from above and an upward displacement of the wire connecting portion 27 preferably is prevented by this contact action. A space enclosed by the pair of projections 52 and the upper surface of the wire connecting portion 27 including the valley 30 preferably functions as a flow path for permitting the flow of the filling material 55 in forward and backward directions.

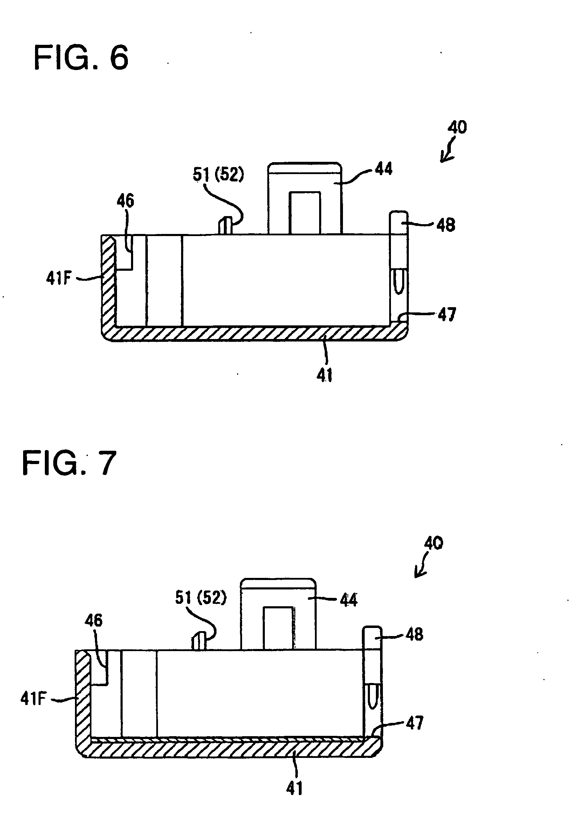

Next, a method for producing the waterproof device A of this embodiment is described. First of all, the conductor 11 is connected with the wire connecting portion 27. On the other hand, in the waterproof cover 40, the lid 42 is kept on standby at or near the closing position and, in this state, only a tiny part of the total injection amount of the filling material 55 preferably is injected to be laid or positioned substantially on the bottom surface of the main body 41 as shown in FIG. 7.

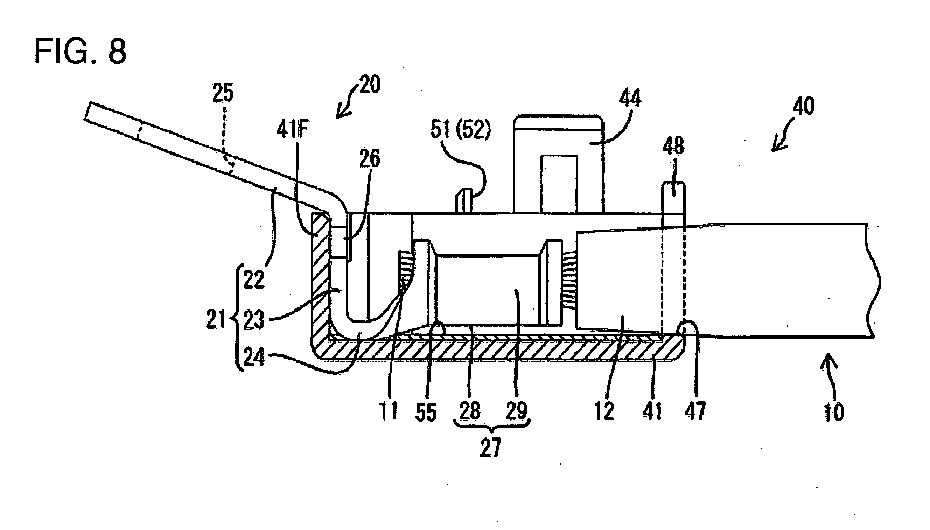

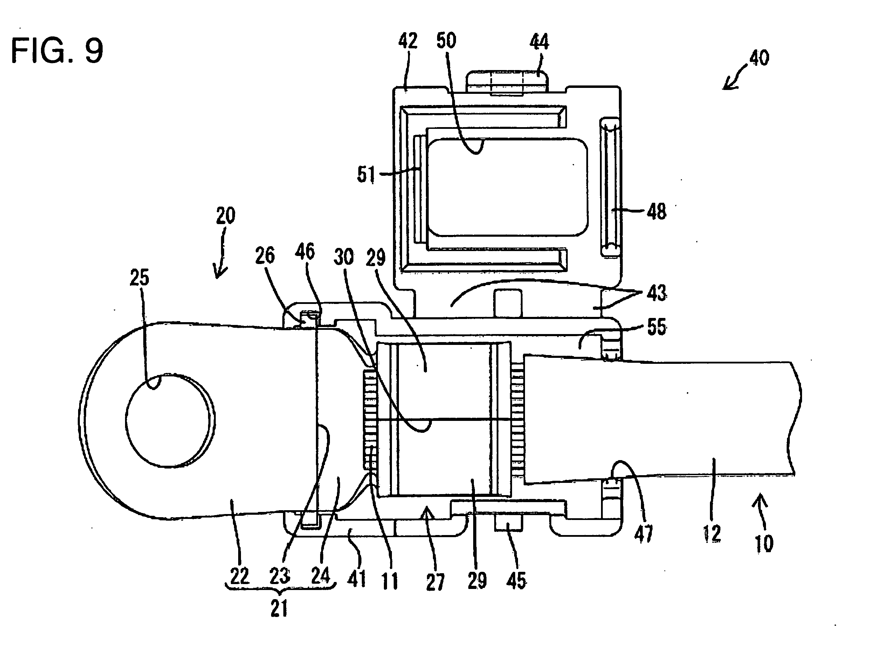

Thereafter, as shown in FIGS. 8 and 9, the connected conductor 11 and wire connecting portion 27, the positioning portion 23, the coupling portion 24 and the part of the wire 10 covered by the insulation coating 12 are at least partly accommodated in the main body 41. At this time, the one or more locking projections 26 are engaged with the one or more locking grooves 46 and/or the positioning portion 23 is brought substantially into contact with the front wall 41 F and/or the (preferably substantially opposite) lateral (left and/or right) wall(s) of the main body 41, whereby the terminal fitting 20 preferably is positioned with respect to the main body 41. Further, by placing the coupling portion 24 substantially on the bottom surface of the main body 41, the terminal fitting 20 is vertically positioned with respect to the main body 41. In this state, the filling material 55 laid on the bottom surface of the main body 41 and the wire connecting portion 27 are vertically spaced apart and the filling material 55 on the bottom surface and the lower surface of the insulation coating 12 are also vertically spaced apart. Further, clearances, into which the filling material 55 is to be injected, are formed between the lateral (left and/or right) surface(s) of the wire connecting portion 27 and the lateral (left and/or right) wall(s), between the coupling portion 24 and the lateral (left and/or right) wall(s) and/or between the insulation coating 12 and the lateral (left and/or right) wall(s).

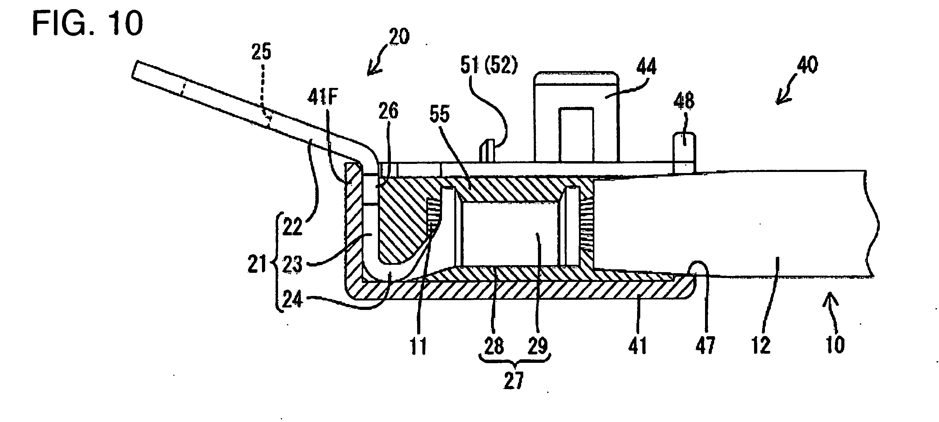

Thereafter, a part of the total injection amount of the filling material 55 is injected into the main body 41 through the opening in the upper surface of the main body 41. At this time, since the lid 42 is not present in the opening of the main body 41, a nozzle (not shown) for injecting the filling material 55 can be freely moved or positioned to substantially evenly fill up the clearances between the terminal fitting 20 and the wire 10 and the main body 41. The injection amount of the filling material 55 at this time is a relatively large amount so that the wire connecting portion 27, the conductor 11 and the coupling portion 24 are substantially entirely and most of the positioning portion 23 except the upper end preferably is buried in the filling material 55 as shown in FIG. 10. The fluid level of the injected filling material 55 is slightly lower than the upper end of the main body 41 (lower surface of the lid 42 at the closing position).

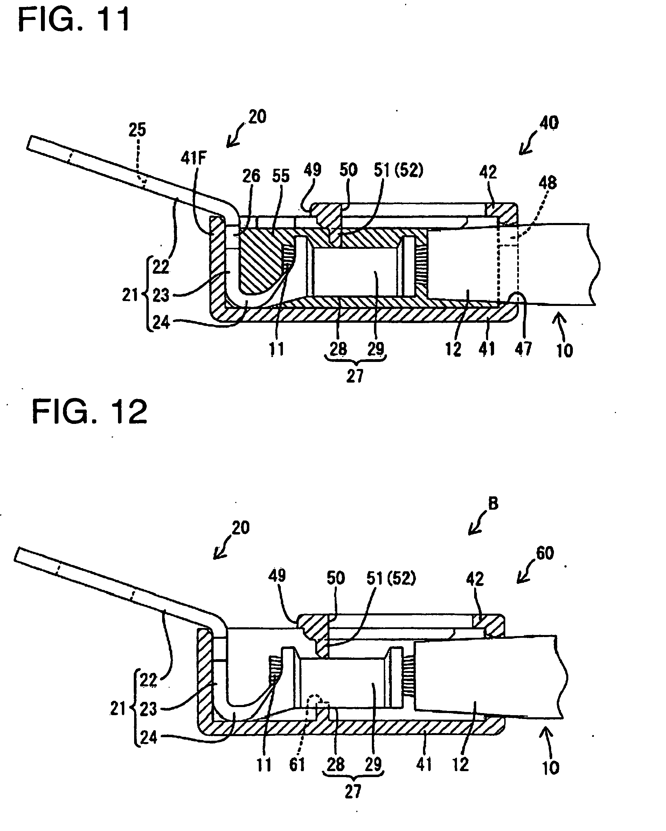

Thereafter, as shown in FIG. 11, the lid 42 is displaced from the opening position towards or to the closing position. In this state, the holding portion 51 is substantially buried in the filling material 55 and/or held substantially in contact with the upper end surfaces of the crimping pieces 29, whereby the wire connecting portion 27 is pressed or held from above to have an upward displacement prevented. Further, since the holding portion 51 presses or holds the wire connecting portion 27 (preferably at two laterally spaced-apart positions) using the one or more, preferably the pair of lateral (left and right) projections 52, an inclination of the wire connecting portion 27 in the lateral direction is prevented.

The space formed between the terminal fitting 20 and the lid 42 is at least partly divided into front and rear sections by the holding portion 51 and the filling material 55 is filled in both divided sections. Since the flow path 53 penetrating in forward and backward directions preferably is formed between the holding portion 51 and the wire connecting portion 27, the filling material 55 can substantially freely flow between the space before the holding portion 51 and that behind the holding portion 51 via this flow path 53.

Thereafter, as shown in FIG. 1, the remainder of the filling material 55 is injected into the waterproof cover 40 (main body 41). At this time, an area of the upper surface of the waterproof cover 40 before the holding portion 51 is open as the confirmation opening 49 (preferably substantially over the entire width of the main body 41) and/or an area of the upper surface of the waterproof cover 40 behind the holding portion 51 is open as the injection opening 50 in a range preferably narrower than the opening width of the main body 41. Thus, the filling material 55 can be injected through either one or both of the confirmation opening 49 and the injection opening 50. In the injection process, the filling material 55 in the main body 41 moves forward or backward via the flow path 53 of the holding portion 51, wherefore there is no difference in the fluid level of the filling material 55 at the opposite sides of the holding portion 51.

After the specified (predetermined or predeterminable) amount of the filling material 55 is entirely injected, the filling material 55 is cured preferably by heating the waterproof cover 40. At this time, if moisture is mixed in the filling material 55, the heated moisture vaporizes and bubbles are generated by steam in the filling material 55. As the heating proceeds, the bubbles expand. These bubble generation and expansion cause a pressing force to be given from the filling material 55 to the terminal fitting 20. Since the acting position, direction and magnitude of this pressing force are unspecified, problems such as a displacement of the terminal fitting and an inclination thereof to an improper posture with respect to the waterproof cover 40 may occur.

In this embodiment, movements of the terminal fitting 20 in forward, backward, lateral and/or downward directions relative to the waterproof cover 40 are prevented by the contact action of the positioning portion 23 and/or the locking action of the locking projection(s) 26 and the locking groove(s) 46. Further, an upward movement of the terminal fitting 20 relative to the waterproof cover 40 preferably is reliably prevented by the contact of the holding portion 51 with the wire connecting portion 27 from above. Thus, even if a pressing force acts from the filling material 55 to the terminal fitting 20 e.g. due to bubbles generated in the filling material 55, there is no likelihood of changing the position and posture of the terminal fitting 20 and, when the filling material 55 is cured, the terminal fitting 20 is held at a substantially correct position and/or in a substantially correct posture with respect to the waterproof cover 40.

The holding portion 51 preferably projects inwardly from the lid 42 constituting the upper wall of the waterproof cover 40. The upper surface of the waterproof cover 40 is formed with the confirmation opening 49 located above the front end portion of the conductor 11 projecting forward from the wire connecting portion 27 and used to visually confirm the state of the front end portion of this conductor 11 obliquely from the front-upper side. Thus, the holding portion 51 may hinder the visual confirmation through this confirmation opening 49. However, since the confirmation opening 49 preferably is arranged behind or adjacent to the holding portion 51 in this embodiment, the state of the conductor 11, i.e. whether or not the front end surface of the conductor 11 is correctly covered by the filling material 55 can be detected (e.g. visually confirmed) through the confirmation opening 49.

If the terminal fitting 20 tries to incline its posture to move the terminal portion 21 side (front end side) with the contact position with the holding portion 51 as a supporting point, the positioning portion 23 is relatively displaced substantially in parallel with the front wall 41 F while being inclined with respect to the front wall 41 F. An angle of inclination of the positioning portion 23 at this time is larger as a distance between the front wall 41 F and the holding portion 51 is shorter. As the positioning portion 23 is more inclined, friction between the positioning portion 23 and the front wall 41 F and that between the locking projections 26 and the locking grooves 46 become larger. Thus, an effect of suppressing the displacement of the positioning portion 23 increases and, consequently, an effect of suppressing the inclination of the terminal fitting 20 is improved. Particularly in view of this point, in this embodiment, the holding portion 51 preferably is held in contact with the wire connecting portion 27 at the position close to the front end of the wire connecting portion 27 to maximally shorten the distance between the front wall 41 F and the holding portion 51. Therefore, the inclination of the terminal fitting 20 can be more effectively prevented.

Further, since the holding portion 51 is so positioned as to at least partly partition the space between the terminal fitting 20 and the waterproof cover 40, the flow of the filling material 55 injected into the waterproof cover 40 may be hindered by the holding portion 51. In this respect, since a part of the filling material 55 preferably is injected into the main body 41 before the holding portion 51 is brought into contact with the terminal fitting 20 in this embodiment, the influence of the holding portion 51 on the flow of the filling material 55 can be suppressed low or reduced.

Further, since a part of the filling material 55 preferably is injected onto the bottom surface of the main body 41 before the wire connecting portion 27 and the conductor 11 are at least partly accommodated into the main body 41, the filling material 55 can be reliably filled between the bottom surface of the main body 41 and the lower surface of the wire connecting portion 27.

Accordingly, to prevent changes in the posture and posture of a terminal fitting due to a process of heating a filling material in a waterproof cover, a terminal fitting 20 is provided with a terminal portion 21 and a wire connecting portion 27 formed to be substantially continuous with the rear end of the terminal portion 21 and to be connected with an exposed part of a conductor 11. The wire connecting portion 27 and the exposed part of the conductor 11 are to be at least partly accommodated in a waterproof cover 40 and clearances in the waterproof cover 40 are at least partly filled with a filling material 55. The waterproof cover 40 is formed with a holding portion 51 for holding the terminal fitting 20 in such a manner as to preventing a movement of the terminal fitting 20 with respect to the waterproof cover 40 by coming into contact with the terminal fitting 20.

### <Second Embodiment>

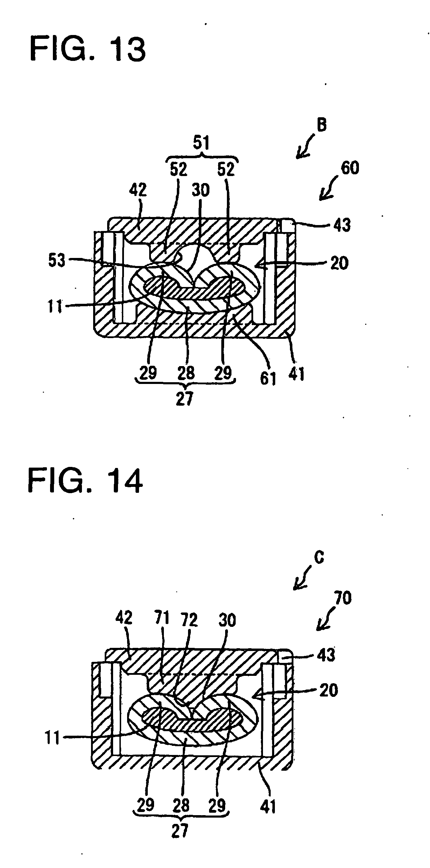

Next, a second preferred embodiment of the present invention is described with reference to FIGS. 12 and 13. A waterproof device B of the second embodiment differs from the first embodiment in that at least one receiving portion 61 (preferably substantially corresponding to at least one holding portion 51) is formed on or in the bottom surface of a main body 41 of a waterproof cover 60 (i.e. inner surface of the waterproof cover 60). This receiving portion 61 comes substantially into contact with the lower surface of the bottom plate 28 of the wire connecting portion 27 to vertically sandwich the wire connecting portion 27 together with the holding portion 51. The wire connecting portion 27 is reliably vertically positioned preferably by being sandwiched between the holding portion 51 and the receiving portion 61. Further, since the upper surface of the receiving portion 61 (contact surface with the wire connecting portion 27) preferably is so curved as to lower a lateral central part thereof, the wire connecting portion 27 is difficult to laterally displace with respect to the receiving portion 61, whereby the terminal fitting 20 preferably is also laterally positioned with respect to the waterproof cover 60. Since the other construction is similar or the same as in the above first embodiment, it is identified by the same reference numerals and the structure, functions and effects thereof are not described.

### <Third Embodiment>

Next, a third preferred embodiment of the present invention is described with reference to FIG. 14. A waterproof device C of the third embodiment differs from the first embodiment in the shape of a holding portion 71. The holding portion 71 is formed with a fitting portion 72 projecting inwardly or downwardly from a lateral intermediate or central position of the inner or lower end edge thereof. With a lid 42 displaced to a closing position, the fitting portion 72 is to be at least partly fitted into the valley 30 of the wire connecting portion 27, thereby preventing a lateral displacement of the terminal fitting 20. Since the other construction is similar or the same as in the above first embodiment, it is identified by the same reference numerals and the structure, functions and effects thereof are not described.

### <Fourth Embodiment>

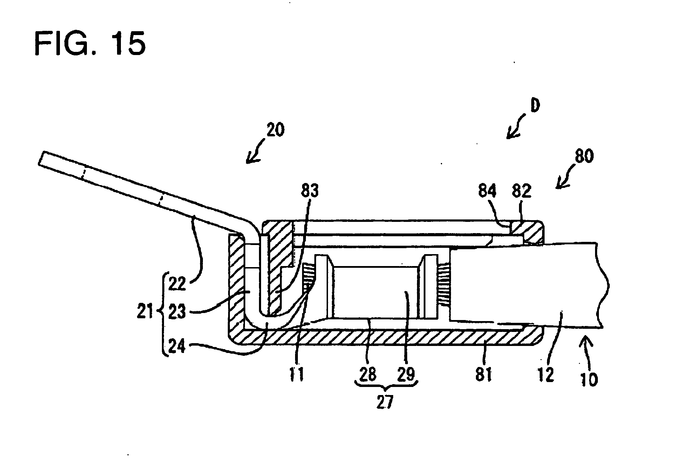

Next, a fourth preferred embodiment of the present invention is described with reference to FIG. 15. A waterproof device D of the fourth embodiment differs from the first embodiment in the shapes of a lid 82 and a holding portion 83 of a waterproof cover 80. The lid 82 of the fourth embodiment preferably covers substantially the entire area of an opening formed in the upper surface of a main body 81 (i.e. substantially the entire area of the opening in the upper surface except a slit permitting the positioning portion 23 to project out from the main body 81). Accordingly, with the lid 82 displaced to a closing position, no opening equivalent to the confirmation opening 49 of the first embodiment for permitting the front end portion of the conductor 11 to be visually confirmed obliquely from the front side is formed before the lid 82. Further, the lid 82 is formed with an injection opening 84 substantially corresponding to the wire connecting portion 27 and the front end portion of the conductor 11 in forward and backward directions. Through this injection opening 84, the filling material 55 can be injected and the conductor 11 can be visually confirmed from right above.

On the other hand, the holding portion 83 is formed to project inwardly of the waterproof cover 80 from the front end edge of the lid 82. Here, since the front end edge of the lid 82 is located slightly before the front end of the conductor 11, the holding portion 83 is or can be at least partly inserted into the space between the front end of the conductor 11 and the positioning portion 23 to preferably come into contact with the coupling portion 24 from above. By this action of pressing the coupling portion 24 from above, an upward displacement of the terminal fitting 20 with respect to the waterproof cover 80 is prevented. Since the other construction is similar or the same as in the above first embodiment, it is identified by the same reference numerals and the structure, functions and effects thereof are not described.

### <Other Embodiments>

The present invention is not limited to the above described and illustrated embodiments. For example, the following embodiments are also included in the technical scope of the present invention.
(1) Although the holding portion is laterally symmetrically shaped in the first to fourth embodiments, it may be laterally asymmetric according to the present invention.
(2) Although the holding portion includes two projections in the first and second embodiments, it may include one, three or more projections according to the present invention.
(3) Although the holding portion comes into contact with the front end portion of the wire connecting portion in the first to third embodiments, it may come into contact with a central position of the wire connecting portion in forward and backward directions or a rear end portion of the wire connecting portion.
(4) The construction for sandwiching the wire connecting portion by the receiving portion and the holding portion in the second embodiment is also applicable to the first and third embodiments.
(5) The construction for pressing a base end portion of the terminal portion by the holding portion in the fourth embodiment is also applicable to the first to third embodiments.
(6) Although the holding portion projects from the same surface as the one formed with the confirmation opening in the above embodiments, it may project from a surface different from the surface formed with the confirmation opening.
(7) Although the holding portion projects from the lid (wall portion) formed with the injection opening for the filling material in the first to fourth embodiments, it may project from another wall portion different from the lid according to the present invention.
(8) Although only one holding portion is provided in the first to fourth embodiments, a plurality of holding portions may be provided.
(9) Although the injection opening and the confirmation opening are formed in the same wall surface (upper surface) in the first to fourth embodiments, they may be formed in different wall surfaces.
(10) Although a part of the filling material is injected before the lid is closed and, then, the remaining filling material is injected with the lid closed in the above embodiments, the filling material may be injected after the lid is closed without injecting any filling material before the lid is closed according to the present invention.
(11) Although the waterproof cover is formed to be a single part by coupling the lid and the main body by the at least one hinge in the first to fourth embodiments, the lid and the main body may be separate parts according to the present invention.
(12) Although the holding portion is formed on the lid in the first to fourth embodiments, it may be formed on the main body.
(13) Although the injection opening is formed in the lid in the first to fourth embodiments, no injection opening may be formed in the lid (parent body of the holding portion).

### LIST OF REFERENCE NUMERALS

- A: waterproof device
- 10: wire
- 11: conductor
- 12: insulation coating
- 20: terminal fitting
- 21: terminal portion
- 23: positioning portion
- 27: wire connecting portion
- 28: bottom plate (base plate)
- 29: crimping piece
- 30: valley
- 40: waterproof cover
- 41: main body
- 41F: front wall
- 42: lid
- 49: confirmation opening
- 50: injection opening
- 51: holding portion
- 52: projection
- 53: flow path
- 55: filling material
- B, C, D: waterproof device
- 60, 70, 80: waterproof cover
- 61: receiving portion
- 71: holding portion
- 72: fitting portion
- 81: main body
- 82: lid
- 83: holding portion
- 84: injection opening

## Claims

1. A waterproof device (A; B; C; D) including waterproof connected parts of a wire (10) and a terminal fitting (20), comprising:
a waterproof cover (40; 60; 70; 80) into which a wire connecting portion (27) of the terminal fitting (20) and a part of the wire (10) are to be accommodated, the wire connecting portion (27) being formed to be continuous with a terminal portion (21) to be connected with a connection object,
wherein clearances in the waterproof cover (40; 60; 70; 80) are at least partly filled with a filling material (55), **characterised in that**
the waterproof cover (40; 60; 70; 80) is formed with at least one holding portion (51; 71; 83) for holding the terminal fitting (20) in such a manner as to prevent a movement of the terminal fitting (20) with respect to the waterproof cover (40; 60; 70; 80) by coming into contact with the terminal fitting (20).

2. A waterproof device according to claim 1, wherein the waterproof cover (40; 60; 70) is formed with at least one confirmation opening (49) substantially corresponding to a front end portion of the wire (10) projecting forward from the wire connecting portion (27).

3. A waterproof device according to claim 2, wherein the holding portion (51; 71) projects from a wall portion (42) formed with the confirmation opening (49) out of wall portions constituting the waterproof cover (40; 60; 70) and is arranged behind the confirmation opening (49).

4. A waterproof device according to one or more of the preceding claims, wherein:
the terminal portion (21) comprises a positioning portion (23) to be positioned by coming into surface contact with a front wall (41 F) of the waterproof cover (40; 60), and
the holding portion (51) comes into contact with a front end portion of the wire connecting portion (27) in a direction substantially parallel to the front wall (41 F).

5. A waterproof device according to one or more of the preceding claims, wherein a contact position of the holding portion (51) with the wire connecting portion (27) is close to the front end of the wire connecting portion (27).

6. A waterproof device according to one or more of the preceding claims, wherein an injection opening (50; 84) used to inject the filling material (55) into the waterproof cover (40; 60; 70; 80) is formed in a wall portion (42; 82) constituting part of the waterproof cover (40; 60; 70; 80), and wherein the holding portion (51; 71; 81) projects from the wall portion (42; 82).

7. A waterproof device according to one or more of the preceding claims, wherein the holding portion (51) includes a plurality of projections (52) which come into contact with the wire connecting portion (27) at a plurality of laterally spaced-apart positions.

8. A waterproof connector according to claim 7, wherein a space enclosed by the plurality of projections (52) and the outer surface of the wire connecting portion (27) serves as a flow path for permitting the flow of the filling material (55) substantially in forward and backward directions.

9. A waterproof device according to one or more of the preceding claims, wherein:
the wire connecting portion (27) is formed such that at least one pair of lateral crimping pieces (29) stand up from a base plate (28) and at least partly surrounds a conductor (11) of the wire (10) by the base plate (28) and the pair of crimping pieces (29), and
the pair of crimping pieces (29) are curved inwardly and the standing end edges thereof bite in or engage the outer circumferential surface of the conductor (11) with the conductor (11) connected with the wire connecting portion (27), whereby a valley (30) extending substantially in forward and backward directions is formed in the upper surface of the wire connecting portion (27).

10. A waterproof connector according to claim 9, wherein the holding portion (71) is formed with at least one fitting portion (72) to be at least partly fitted into the valley (30).

11. A waterproof device according to one or more of the preceding claims, wherein at least one receiving portion (61) for sandwiching the wire connecting portion (27) together with the holding portion (51) is formed on the inner surface of the waterproof cover (60).

12. A method for producing a waterproof device (A; B; C; D) for waterproofing connected parts of a conductor (11) of a wire (10) and a wire connecting portion (27) of a terminal fitting (20) by at least partly accommodating the connected parts in a waterproof cover (40; 60; 70; 80) and at least partly injecting a filling material (55) into the waterproof cover (40; 60; 70; 80), comprising the steps of:
at least partly accommodating the connected conductor (11) and wire connecting portion (27) in a main body (41) of the waterproof cover (40; 60; 70; 80),
injecting a part of the filling material (55) into the main body (41),
mounting a lid (42; 82) in an opening of the main body (41) to bring at least one holding portion (51; 71; 83) of the lid (42; 82) into contact with the terminal fitting (20) in such a manner as to prevent a movement of the terminal fitting (20) with respect to the waterproof cover (40; 60; 70; 80), and
injecting the remainder of the filling material (55) into the main body (41).

13. A method according to claim 12, further comprising a step of injecting a part of the filling material (55) onto the bottom surface of the main body (41) before the connected conductor (11) and wire connecting portion (27) are at least partly accommodated into the main body (41).

14. A method according to claim 12 or 13, further comprising a step of detecting a filled state of the filling material (55) through at least one confirmation opening (49) formed in the waterproof cover (40; 60; 70) substantially corresponding to a front end portion of the wire (10) projecting forward from the wire connecting portion (27), wherein the holding portion (51; 71) preferably projects from a wall portion (42) formed with the confirmation opening (49) out of wall portions constituting the waterproof cover (40; 60; 70) and is arranged behind the confirmation opening (49).

15. A method according to claim 12, 13 or 14, further comprising a step of positioning a positioning portion (23) of the terminal portion (21) by bringing it into surface contact with a front wall (41 F) of the waterproof cover (40; 60), wherein the holding portion (51) comes into contact with a front end portion of the wire connecting portion (27) in a direction substantially parallel to the front wall (41 F).

## Patentansprüche

1. Wasserdichte Vorrichtung (A; B; C; D), die wasserdichte verbundene Teile eines Drahts (10) und eines Anschlusspassstücks bzw. -kontakts (20) enthält, umfassend:
eine wasserdichte Abdeckung (40; 60; 70; 80), in der ein Drahtverbindungsabschnitt (27) des Anschlusspassstücks bzw. -kontakts (20) und ein Teil des Drahts (10) aufzunehmen bzw. unterzubringen sind, wobei der Drahtverbindungsabschnitt (27) so gebildet ist, dass er durchgängig mit einem Anschlussabschnitt (21) ist, der mit einem Verbindungsobjekt zu verbinden ist,
wobei Zwischenräume in der wasserdichten Abdeckung (40; 60; 70; 80) zumindest teilweise mit einem Füllmaterial (55) gefüllt sind,
**dadurch gekennzeichnet, dass**
die wasserdichte Abdeckung (40; 60; 70; 80) mit zumindest einem Halteabschnitt (51; 71; 83) gebildet ist, um das Anschlusspassstück bzw. -kontakt (20) auf eine solche Weise zu halten, dass eine Bewegung des Anschlusspassstücks bzw. -kontakts (20) bezüglich der wasserdichten Abdeckung (40; 60; 70; 80) verhindert wird, indem er mit dem Anschlusspassstück bzw. -kontakt (20) in Kontakt kommt.

2. Wasserdichte Vorrichtung nach Anspruch 1, wobei die wasserdichte Abdekkung (40; 60; 70) mit zumindest einer Bestätigungsöffnung (49) gebildet ist, die im Wesentlichen einem vorderen Endabschnitt des Drahts (10) entspricht, der von dem Drahtverbindungsabschnitt (27) nach vorne ragt.

3. Wasserdichte Vorrichtung nach Anspruch 2, wobei der Halteabschnitt (51; 71) von einem mit der Bestätigungsöffnung (49) gebildeten Wandabschnitt (42) aus Wandabschnitten vorragt, welche die wasserdichte Abdeckung (40; 60; 70) darstellen, und hinter der Bestätigungsöffnung (49) angeordnet ist.

4. Wasserdichte Vorrichtung nach einem oder mehreren der vorhergehenden Ansprüche, wobei:
der Anschlussabschnitt (21) einen Positionierungsabschnitt (23) umfasst, der durch Flächen- bzw. Oberflächeninkontaktkommen mit einer vorderen Wand (41 F) der wasserdichten Abdeckung (40; 60) zu positionieren ist, und
der Halteabschnitt (51) mit einem vorderen Endabschnitt des Drahtverbindungsabschnitts (27) in einer Richtung im Wesentlichen parallel zu der vorderen Wand (41 F) in Kontakt kommt.

5. Wasserdichte Vorrichtung nach einem oder mehreren der vorhergehenden Ansprüche, wobei eine Kontaktposition des Halteabschnitts (51) mit dem Drahtverbindungsabschnitt (27) nahe dem vorderen Ende des Drahtverbindungsabschnitts (27) ist.

6. Wasserdichte Vorrichtung nach einem oder mehreren der vorhergehenden Ansprüche, wobei eine Einspritzöffnung (50; 84), die zum Einspritzen des Füllmaterials (55) in die wasserdichte Abdeckung (40; 60; 70; 80) verwendet wird, in einem Wandabschnitt (42; 82) gebildet ist, der einen Teil der wasserdichten Abdeckung (40; 60; 70; 80) darstellt, und wobei der Halteabschnitt (51; 71; 81) von dem Wandabschnitt (42; 82) vorragt.

7. Wasserdichte Vorrichtung nach einem oder mehreren der vorhergehenden Ansprüche, wobei der Halteabschnitt (51) eine Mehrzahl von Vorsprüngen (52) enthält, die mit dem Drahtverbindungsabschnitt (27) an einer Mehrzahl von lateral beabstandeten Positionen in Kontakt kommen.

8. Wasserdichter Verbinder nach Anspruch 7, wobei ein Raum, der von der Mehrzahl von Vorsprüngen (52) und der Außenfläche bzw. -oberfläche des Drahtverbindungsabschnitts (27) umgeben bzw. eingeschlossen wird, als ein Flussweg dient, der den Fluss des Füllmaterials (55) im Wesentlichen in Vorwärts- und Rückwärtsrichtung erlaubt.

9. Wasserdichte Vorrichtung nach einem oder mehreren der vorhergehenden Ansprüche, wobei:
der Drahtverbindungsabschnitt (27) derart gebildet ist, dass zumindest ein Paar lateraler Crimpstücke (29) von einer Basisplatte (28) nach oben stehen und er einen Leiter (11) des Drahts (10) durch die Basisplatte (28) und das Paar Crimpstücke (29) zumindest teilweise umgibt, und
das Paar Crimpstücke (29) nach innen gekrümmt sind und die abstehenden Endkanten bzw. -ränder davon in die äußere Umfangsfläche bzw. -oberfläche des Leiters (11) beißen bzw. diese schneiden oder damit mit in Eingriff sind, wobei der Leiter (11) mit dem Drahtverbindungsabschnitt (27) verbunden ist, wodurch ein Tal bzw. eine Kehle (30), die sich im Wesentlichen in Vorwärts- und Rückwärtsrichtung erstreckt, in der oberen Fläche bzw. Oberfläche des Drahtverbindungsabschnitts (27) gebildet ist.

10. Wasserdichter Verbinder nach Anspruch 9, wobei der Halteabschnitt (71) mit zumindest einem Passabschnitt (72) gebildet ist, der zumindest teilweise in die Kehle (30) einzupassen ist.

11. Wasserdichte Vorrichtung nach einem oder mehreren der vorhergehenden Ansprüche, wobei zumindest ein Aufnahmeabschnitt (61), der den Drahtverbindungsabschnitt (27) zusammen mit dem Halteabschnitt (51) zwischen sich anordnet bzw. aufnimmt, an der Innenfläche bzw. -oberfläche der wasserdichten Abdeckung (60) gebildet ist.

12. Verfahren zum Herstellen einer wasserdichten Vorrichtung (A; B; C; D) zum Abdichten bzw. Wasserdichtmachen von verbundenen Teilen eines Leiters (11) eines Drahts (10) und eines Drahtverbindungsabschnitts (27) eines Anschlusspassstücks bzw. -kontakts (20) durch zumindest teilweises Aufnehmen bzw. Unterbringen der verbundenen Teile in einer wasserdichten Abdeckung (40; 60; 70; 80) und zumindest teilweises Einspritzen eines Füllmaterials (55) in die wasserdichte Abdeckung (40; 60; 70; 80), umfassend die Schritte:
zumindest teilweises Aufnehmen bzw. Unterbringen des verbundenen Leiters (11) und des Drahtverbindungsabschnitts (27) in einem Hauptkörper (41) der wasserdichten Abdeckung (40; 60; 70; 80),
Einspritzen eines Teils des Füllmaterials (55) in den Hauptkörper (41),
Montieren eines Deckels (42; 82) in einer Öffnung des Hauptkörpers (41), um zumindest einen Halteabschnitt (51; 71; 83) des Deckels (42; 82) mit dem Anschlusspassstück bzw. -kontakt (20) auf eine Weise in Kontakt zu bringen, dass eine Bewegung des Anschlusspassstücks bzw. -kontakts (20) bezüglich der wasserdichten Abdeckung (40; 60; 70; 80) verhindert wird, und
Einspritzen des Rests des Füllmaterials (55) in den Hauptkörper (41).

13. Verfahren nach Anspruch 12, ferner umfassend einen Schritt des Einspritzens eines Teils des Füllmaterials (55) auf die Bodenfläche bzw. -oberfläche des Hauptkörpers (41), bevor der verbundene Leiter (11) und der Drahtverbindungsabschnitt (27) zumindest teilweise in dem Hauptkörper (41) aufgenommen werden.

14. Verfahren nach Anspruch 12 oder 13, ferner umfassend einen Schritt des Detektierens eines Füllzustands des Füllmaterials (55) durch zumindest eine in der wasserdichten Abdeckung (40; 60; 70) gebildete Bestätigungsöffnung (49), die im Wesentlichen einem vorderen Endabschnitt des Drahts (10) entspricht, der von dem Drahtverbindungsabschnitt (27) nach vorne ragt, wobei der Halteabschnitt (51; 71) vorzugsweise von einem mit der Bestätigungsöffnung (49) gebildeten Wandabschnitt (42) aus Wandabschnitten vorragt, welche die wasserdichte Abdeckung (40; 60; 70) darstellen, und hinter der Bestätigungsöffnung (49) angeordnet ist.

15. Verfahren nach Anspruch 12, 13 oder 14, ferner umfassend einen Schritt des Positionierens eines Positionierungsabschnitts (23) des Anschlussabschnitts (21), indem dieser in Flächen- bzw. Oberflächenkontakt mit einer vorderen Wand (41 F) der wasserdichten Abdeckung (40; 60) kommt, wobei der Halteabschnitt (51) mit einem vorderen Endabschnitt des Drahtverbindungsabschnitts (27) in einer Richtung im Wesentlichen parallel zu der vorderen Wand (41 F) in Kontakt kommt.

## Revendications

1. Dispositif étanche (A ; B ; C ; D) comprenant des parties connectées étanches d'un fil (10) et d'une armature de borne (20), comprenant :
un couvercle étanche (40 ; 60 ; 70 ; 80) dans lequel doivent être reçues une partie de connexion de fil (27) de l'armature de borne (20) et une partie du fil (10), la partie de connexion de fil (27) étant formée pour être continue avec une partie de borne (21) pour être connectée à un objet de connexion,
dans lequel des espaces libres dans le couvercle étanche (40 ; 60 ; 70 ; 80) sont au moins partiellement remplis d'un matériau de remplissage (55), **caractérisé en ce que**
le couvercle étanche (40 ; 60 ; 70 ; 80) est formé d'au moins une partie de retenue (51 ; 71 ; 83) destinée à retenir l'armature de borne (20) de manière à éviter un mouvement de l'armature de borne (20) par rapport au couvercle étanche (40 ; 60 ; 70 ; 80) en entrant en contact avec l'armature de borne (20).

2. Dispositif étanche selon la revendication 1, dans lequel le couvercle étanche (40 ; 60 ; 70) est formé d'au moins une ouverture de confirmation (49) correspondant sensiblement à une partie d'extrémité avant du fil (10) faisant saillie vers l'avant de la partie de connexion de fil (27).

3. Dispositif étanche selon la revendication 2, dans lequel la partie de retenue (51 ; 71) fait saillie depuis une partie murale (42) formée de l'ouverture de confirmation (49) hors des parties murales constituant le couvercle étanche (40 ; 60 ; 70) et est disposée derrière l'ouverture de confirmation (49).

4. Dispositif étanche selon une ou plusieurs des revendications précédentes, dans lequel :
la partie de borne (21) comprend une partie de positionnement (23) devant être positionnée en entrant en contact de surface avec une paroi avant (41F) du couvercle étanche (40 ; 60), et la partie de retenue (51) vient en contact avec une partie d'extrémité avant de la partie de connexion de fil (27) dans une direction sensiblement parallèle à la paroi avant (41F).

5. Dispositif étanche selon une ou plusieurs des revendications précédentes, dans lequel une position de contact de la partie de retenue (51) avec la partie de connexion de fil (27) est proche de l'extrémité avant de la partie de connexion de fil (27).

6. Dispositif étanche selon une ou plusieurs des revendications précédentes, dans lequel une ouverture d'injection (50 ; 84) utilisée pour injecter le matériau de remplissage (55) dans le couvercle étanche (40 ; 60 ; 70 ; 80) est formée dans une paroi murale (42 ; 82) constituant une partie du couvercle étanche (40 ; 60 ; 70 ; 80), et dans lequel la partie de retenue (51 ; 71 ; 81) fait saillie depuis la partie murale (42 ; 82).

7. Dispositif étanche selon une ou plusieurs des revendications précédentes, dans lequel la partie de retenue (51) comprend une pluralité de saillies (52) qui viennent en contact avec la partie de connexion de fil (27) dans une pluralité de positions latéralement espacées.

8. Connecteur étanche selon la revendication 7, dans lequel un espace ceint par la pluralité de saillies (52) et la surface extérieure de la partie de connexion de fil (27) sert de voie d'écoulement pour permettre l'écoulement du matériau de remplissage (55) sensiblement dans les directions avant et arrière.

9. Dispositif étanche selon une ou plusieurs des revendications précédentes, dans lequel :
la partie de connexion de fil (27) est formée de telle sorte qu'au moins une paire de pièces de sertissage latérales (29) est verticale depuis une plaque de base (28) et entoure au moins partiellement un conducteur (11) du fil (10) par la plaque de base (28) et la paire de pièces de sertissage (29), et
la paire de pièces de sertissage (29) est incurvée vers l'intérieur et les bords d'extrémité verticaux de celles-ci mordent dans ou entrent en prise avec la surface circonférentielle externe du conducteur (11) avec le conducteur (11) connecté à la partie de connexion de fil (27), une vallée (30) qui s'étend sensiblement dans les directions avant et arrière étant formée dans la surface supérieure de la partie de connexion de fil (27).

10. Connecteur étanche selon la revendication 9, dans lequel la partie de retenue (71) est formée d'au moins une partie d'ajustement (72) pour être au moins partiellement ajustée dans la vallée (30).

11. Dispositif étanche selon une ou plusieurs des revendications précédentes, dans lequel au moins une partie de réception (61) destinée à placer en sandwich la partie de connexion de fil (27) avec la partie de retenue (51) est formée sur la surface interne du couvercle étanche (60).

12. Procédé de production d'un dispositif étanche (A ; B ; C ; D) pour rendre étanche des parties connectées d'un conducteur (11) d'un fil (10) et une partie de connexion de fil (27) d'une armature de borne (20) en recevant au moins partiellement les parties connectées dans un couvercle étanche (40 ; 60 ; 70 ; 80) et en injectant au moins partiellement un matériau de remplissage (55) dans le couvercle étanche (40 ; 60 ; 70 ; 80) comprenant les étapes suivantes :
réception au moins partielle du conducteur connecté (11) et de la partie de connexion de fil (27) dans un corps principal (41) du couvercle étanche (40 ; 60 ; 70 ; 80),
injection d'une partie du matériau de remplissage (55) dans le corps principal (41),
montage d'un couvercle (42 ; 82) dans une ouverture du corps principal (41) pour amener au moins une partie de retenue (51 ; 71 ; 83) du couvercle (42 ; 82) en contact avec l'armature de borne (20) de manière à éviter un mouvement de l'armature de borne (20) par rapport au couvercle étanche (40 ; 60 ; 70 ; 80), et injection du reste du matériau de remplissage (55) dans le corps principal (41).

13. Procédé selon la revendication 12, comprenant en outre l'étape d'injection d'une partie du matériau de remplissage (55) sur la surface inférieure du corps principal (41) avant que le conducteur connecté (11) et la partie de connexion de fil (27) soient au moins partiellement reçus dans le corps principal (41).

14. Procédé selon la revendication 12 ou 13, comprenant en outre une étape de détection d'un état rempli du matériau de remplissage (55) à travers au moins une ouverture de confirmation (49) formée dans le couvercle étanche (40 ; 60 ; 70) correspondant sensiblement à une partie d'extrémité avant du fil (10) faisant saillie vers l'avant de la partie de connexion de fil (27), dans lequel la partie de retenue (51 ; 71) fait saillie de préférence depuis une partie murale (42) formée de l'ouverture de confirmation (49) hors des parties murales constituant le couvercle étanche (40 ; 60 ; 70) et est disposée derrière l'ouverture de confirmation (49).

15. Procédé selon la revendication 12, 13 ou 14, comprenant en outre une étape de positionnement d'une partie de positionnement (23) de la partie de borne (21) en l'amenant en contact de surface avec une paroi avant (41F) du couvercle étanche (40 ; 60), dans lequel la partie de retenue (51) vient en contact avec une partie d'extrémité avant de la partie de connexion de fil (27) dans une direction sensiblement parallèle à la paroi avant (41F).
